# EUROPEAN PATENT SPECIFICATION

(11) **EP 4 470 337 B1**
(45) Date of publication and mention of the grant of the patent: **10.12.2025**
(21) Application number: 23805678.2
(22) Date of filing: 08.11.2023
(51) Int. Cl.: H04W 76/28, H04W 52/02

(54) **DEVICES, METHODS AND APPARATUSES FOR DISCONTINUOUS RECEPTION**
VORRICHTUNGEN, VERFAHREN UND VORRICHTUNGEN FÜR DISKONTINUIERLICHEN EMPFANG
DISPOSITIFS, PROCÉDÉS ET APPAREILS DE RÉCEPTION DISCONTINUE

(30) Priority: 16.11.2022 GB 202217113
(43) Date of publication of application: 04.12.2024
(73) Proprietor: Nokia Technologies Oy, 02610 Espoo (FI)
(72) Inventor: KOSKINEN, Jussi-Pekka, 90620 Oulu (FI); TURTINEN, Samuli Heikki, 90620 Oulu (FI)
(74) Representative: Laine IP Oy
(86) International application number: PCT/IB2023/061286
(87) International publication number: WO 2024/105508

(56) References cited:
- MEDIATEK INC: "Remaining issues for eDRX", vol. RAN WG2, no. Online; 20210519 - 20210527, 10 May 2021 (2021-05-10), XP052003895, Retrieved from the Internet <URL:https://ftp.3gpp.org/tsg_ran/WG2_RL2/TSGR2_114-e/Docs/R2-2105671.zip R2-2105671 Remaining issues for eDRX.docx> [retrieved on 20210510]
- MEDIATEK INC: "Remaining issues for eDRX", vol. RAN WG2, no. Online; 20210809 - 20210827, 5 August 2021 (2021-08-05), XP052032491, Retrieved from the Internet <URL:https://ftp.3gpp.org/tsg_ran/WG2_RL2/TSGR2_115-e/Docs/R2-2108230.zip R2-2108230 Remaining issues for eDRX.docx> [retrieved on 20210805]
- HUAWEI ET AL: "eDRX for RedCap UE", vol. RAN WG2, no. Electronic; 20210809 - 20210827, 6 August 2021 (2021-08-06), XP052033956, Retrieved from the Internet <URL:https://ftp.3gpp.org/tsg_ran/WG2_RL2/TSGR2_115-e/Docs/R2-2107210.zip R2-2107210 eDRX for RedCap UE.docx> [retrieved on 20210806]

## Description

### FIELD

Embodiments of the present disclosure generally relate to the field of communication, and in particular, to devices and method for discontinuous reception (DRX).

### BACKGROUND

In communication technology, there is a constant evolution ongoing in order to provide efficient and reliable solutions for utilizing wireless communication networks. Currently, efforts have been made to develop 5th generation (5G) or 5G advance wireless system. The new wireless systems can support various types of service applications for terminal devices.

In the current wireless system, a terminal device may use discontinuous reception (DRX) mode to communicate with a network device for power conservation purposes. Further, an extended DRX (eDRX) mode has been proposed to further reduce power consumption. The eDRX mode may enable the terminal device to set and later change how long the terminal device stays in low-power sleep mode before it wakes up to listen for any network indications for pending data, and the eDRX mode may also enable the terminal device's monitoring of for example a paging in a paging time window (PTW). Since the terminal device is not reachable when it is sleeping, the time to reach the terminal device depends on how long an eDRX cycle is set. The DRX cycle is a periodicity for monitoring a signal from the network device in the DRX mode, and the DRX mode includes the eDRX mode. However, enhancements on the eDRX mode are still in further investigation.

MEDIATEK INC: "Remaining issues for eDRX", R2-2105671, 3RD GENERATION PARTNERSHIP PROJECT (3GPP), 10 May 2021, discusses some remaining issues for supporting eDRX in RedCap.

MEDIATEK INC: "Remaining issues for eDRX", R2-2108230, 3RD GENERATION PARTNERSHIP PROJECT (3GPP), 5 August 2021, discusses the remaining issues for supporting eDRX in RedCap.

HUAWEI ET AL: "eDRX for RedCap UE", R2-2107210, 3RD GENERATION PARTNERSHIP PROJECT (3GPP), 6 August 2021, continues to discuss eDRX mechanisms for RedCap UE.

### SUMMARY

The invention is set out in the appended set of claims.

### BRIEF DESCRIPTION OF THE DRAWINGS

Some example embodiments will now be described with reference to the accompanying drawings, where:
FIG. 1 illustrates an example network environment in which example embodiments of the present disclosure may be implemented;
FIG. 2 illustrates an example flowchart of a method implemented at a terminal device according to example embodiments of the present disclosure;
FIG. 3 illustrates an example flowchart of a method implemented at a network device according to example embodiments of the present disclosure;
FIG. 4 illustrates an example simplified block diagram of a device that is suitable for implementing embodiments of the present disclosure; and
FIG. 5 illustrates an example block diagram of an example computer readable medium in accordance with some embodiments of the present disclosure.

Throughout the drawings, the same or similar reference numerals represent the same or similar element.

### DETAILED DESCRIPTION

Principle of the present disclosure will now be described with reference to some example embodiments. It is to be understood that these embodiments are described only for the purpose of illustration and help those skilled in the art to understand and implement the present disclosure, without suggesting any limitation as to the scope of the disclosure. The disclosure described herein can be implemented in various manners other than the ones described below.

In the following description and claims, unless defined otherwise, all technical and scientific terms used herein have the same meaning as commonly understood by one of ordinary skills in the art to which this disclosure belongs.

References in the present disclosure to "one embodiment," "an embodiment," "an example embodiment," and the like indicate that the embodiment described may include a particular feature, structure, or characteristic, but it is not necessary that every embodiment includes the particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to affect such feature, structure, or characteristic in connection with other embodiments whether or not explicitly described.

It shall be understood that although the terms "first" and "second" etc. may be used herein to describe various elements, these elements should not be limited by these terms. These terms are only used to distinguish one element from another. For example, a first element could be termed a second element, and similarly, a second element could be termed a first element, without departing from the scope of example embodiments. As used herein, the term "and/or" includes any and all combinations of one or more of the listed terms.

The terminology used herein is for the purpose of describing particular embodiments only and is not intended to be limiting of example embodiments. As used herein, the singular forms "a", "an" and "the" are intended to include the plural forms as well, unless the context clearly indicates otherwise. It will be further understood that the terms "comprises", "comprising", "has", "having", "includes" and/or "including", when used herein, specify the presence of stated features, elements, and/or components etc., but do not preclude the presence or addition of one or more other features, elements, components and/ or combinations thereof. As used herein, "at least one of the following: <a list of two or more elements>" and "at least one of <a list of two or more elements>" and similar wording, where the list of two or more elements are joined by "and" or "or", mean at least any one of the elements, or at least any two or more of the elements, or at least all the elements.

As used in this application, the term "circuitry" may refer to one or more or all of the following:
(a) hardware-only circuit implementations (such as implementations in only analog and/or digital circuitry) and
(b) combinations of hardware circuits and software, such as (as applicable):
   (i) a combination of analog and/or digital hardware circuit(s) with software/firmware and
   (ii) any portions of hardware processor(s) with software (including digital signal processor(s)), software, and memory(ies) that work together to cause an apparatus, such as a mobile phone or server, to perform various functions) and
(c) hardware circuit(s) and or processor(s), such as a microprocessor(s) or a portion of a microprocessor(s), that requires software (e.g., firmware) for operation, but the software may not be present when it is not needed for operation.

This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, a baseband integrated circuit or processor integrated circuit for a mobile device or a similar integrated circuit in server, a cellular network device, or other computing or network device.

As used herein, the term "communication network" refers to a network following any suitable communication standards, such as Long Term Evolution (LTE), LTE-Advanced (LTE-A), Wideband Code Division Multiple Access (WCDMA), High-Speed Packet Access (HSPA), Narrow Band Internet of Things (NB-IoT) and so on. Furthermore, the communications between a terminal device and a network device in the communication network may be performed according to any suitable generation communication protocols, including, but not limited to, the third generation (3G), the fourth generation (4G), 4.5G, the future fifth generation (5G) communication protocols, and/or any other protocols either currently known or to be developed in the future. Embodiments of the present disclosure may be applied in various communication systems. Given the rapid development in communications, there will of course also be future type communication technologies and systems with which the present disclosure may be embodied. It should not be seen as limiting the scope of the present disclosure to only the aforementioned system.

As used herein, the term "network device" refers to a node in a communication network via which a terminal device accesses the network and receives services therefrom. The network device may refer to a base station (BS) or an access point (AP), for example, a node B (NodeB or NB), an evolved NodeB (eNodeB or eNB), a New Radio (NR) NB (also referred to as a gNB), a Remote Radio Unit (RRU), a radio header (RH), a remote radio head (RRH), a relay, a low power node such as a femto, a pico, and so forth, depending on the applied terminology and technology.

The term "terminal device" refers to any end device that may be capable of wireless communication. By way of example rather than limitation, a terminal device may also be referred to as a communication device, user equipment (UE), a Subscriber Station (SS), a Portable Subscriber Station, a Mobile Station (MS), or an Access Terminal (AT). The terminal device may include, but not limited to, a mobile phone, a cellular phone, a smart phone, voice over IP (VoIP) phones, wireless local loop phones, a tablet, a wearable terminal device, a personal digital assistant (PDA), portable computers, desktop computer, image capture terminal devices such as digital cameras, gaming terminal devices, music storage and playback appliances, vehicle-mounted wireless terminal devices, wireless endpoints, mobile stations, laptop-embedded equipment (LEE), laptop-mounted equipment (LME), USB dongles, smart devices, wireless customer-premises equipment (CPE), an Internet of Things (loT) device, a watch or other wearable, a head-mounted display (HMD), a vehicle, a drone, a medical device and applications (e.g., remote surgery), an industrial device and applications (e.g., a robot and/or other wireless devices operating in an industrial and/or an automated processing chain contexts), a consumer electronics device, a device operating on commercial and/or industrial wireless networks, and the like. In the following description, the terms "terminal device", "communication device", "terminal", "user equipment" and "UE" may be used interchangeably.

As stated above, eDRX mode has been proposed to further reduce power consumption. The eDRX has been studied and specified in the last couple of years by the third-generation partnership project (3GPP). Currently, it has been agreed in the 3GPP that also non-reduced capability (non-RedCap) devices can support eDRX, so eDRX is needed to serve both RedCap devices and non-RedCaps. It has also been agreed that a radio resource control (RRC) idle state (RRC_idle state) and/or RRC_inactive state specific eDRX-Allowed indication can be broadcasted by the network.

Particularly, the following objective has been made in the 3GPP.

| | | | |
|---|---|---|---|
| 4 Objective | | | |
| | 4.1 Objective of Core part WI | | |
| | This WI has the following objectives: | | |
| | | ... | |
| | | • Specify support for the following Extended DRX enhancements for RedCap UEs [RAN2, RAN3, RAN4]: | |
| | | | ∘ Extended DRX for RRC Inactive and Idle with eDRX cycles up to 10.24 s, without using PTW and PH, and with common design (e.g. common set of eDRX values) between RRC Inactive and Idle |
| | | | ∘ Extended DRX for RRC Inactive and Idle with eDRX cycles up to 10485.76 s; the details of mechanisms and feasibility regarding maximum length of the extended DRX cycles for RRC Inactive and Idle need to be checked by SA2, CT1 and/or RAN4. |
| | | | ∘ RAN2 to decide which Node(s) configure eDRX in RRC_Idle and RRC_Inactive. |

In current system, if the UE is configured with eDRX in the RRC_idle state and the eDRX-Allowed indication for the RRC_idle state is broadcasted, the UE is allowed to use eDRX in the RRC_idle state. If the UE is configured with eDRX in the RRC_idle state and the eDRX-Allowed indication for the RRC_idle state is broadcasted, the UE is allowed to use eDRX in the RRC_idle state.

In addition, the UE may select DRX cycle of the UE from different options. For example, a UE specific DRX cycle, a default DRX cycle, an eDRX cycle configured by an RRC signaling (by a radio access network (RAN)), an eDRX cycle configured by upper layer (a core network (CN)), in case the UE is configured with eDRX. However, there might be some issues with the current DRX cycle determination approach, because the UE may be configured with eDRX for RAN paging in the RRC_inactive state and/or for CN paging in the RRC_idle state, but the UE is not necessarily operating an eDRX mode.

This scenario might happen, for example, in case the eDRX is not allowed for the specific RRC state where the UE is served by a cell which the UE has (re)selected. In such case, the terminal device is still configured with the eDRX by CN or the RAN, ie., there is an un-synchronization between the eDRX configuration and the eDRX allowance. Thus, this results in an erroneous selection of the DRX cycle and in turn the UE and network may become unsynchronized of the used DRX cycle, in which case the network may be unable to reach the UE, for example, through paging.

In view of the above, enhancements on a determination of the DRX cycle of the terminal device supporting the eDRX mode shall be considered. Therefore, there is a need for improved solutions for determining the DRX cycle at the UE and network side with the guarantee of the synchronization of the determined DRX cycle at both sides.

Thus, embodiments of the present disclosure provide a solution for determining the DRX cycle in the eDRX mode. In this solution, a terminal device determines a DRX operation status of the terminal device based on whether the terminal device operates in an eDRX mode. Moreover, the terminal device determines a DRX cycle of the terminal device based on the determination. The network device may determine the DRX cycle of the terminal device in a similar way.

By determining the DRX operation status as above, it is possible to facilitate the accurate determination of the DRX cycle, thereby improving the transmission efficiency for eDRX. Meanwhile, it is possible to ensure synchronization of the DRX cycle at both network and terminal sides.

As used herein "eDRX" may refer to an extended discontinuous reception (DRX) mode. In an eDRX cycle, a terminal device may enable its receiving ability in a PTW and disable its receiving ability outside of the PTW for paging message receiving. Different from a DRX mode, eDRX could provide longer low-power sleep mode for a terminal device. Therefore, the eDRX may save more power consumption.

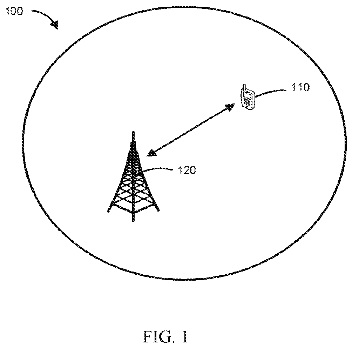

Hereinafter, principle and embodiments of the present disclosure will be described in detail below with reference to the accompanying drawings. Reference is first made to FIG. 1, which illustrates an example network environment 100 in which example embodiments of the present disclosure can be implemented.

The network environment 100, which may be a part of a communication network, comprises a terminal device 110 and a network device 120 communicating with each other or with other devices via each other.

The network environment 100 may comprise any suitable number of devices and cells. In the network environment 100, the terminal device 110 and the network device 120 can communicate data and control information with each other. A link from the network device 120 to the terminal device 110 is referred to as a downlink (DL), while a link from the terminal device 110 to the network device 120 is referred to as an uplink (UL).

It is to be understood that the number of the terminal device 120, and the number of the network device 110 as shown in the communication network environment 100 are only for the purpose of illustration, without any limitation to the scope of the present disclosure. In some example embodiments, the communication network environment 100 may include any number of terminal devices, and/or any number of network devices.

It is to be understood that two devices are shown in the network environment 100 only for the purpose of illustration, without suggesting any limitation to the scope of the present disclosure. In some example embodiments, the network environment 100 may comprise a further device to communicate with the terminal device 110 and network device 120.

The communications in the network environment 100 may follow any suitable communication standards or protocols, which are already in existence or to be developed in the future, such as Universal Mobile Telecommunications System (UMTS), long term evolution (LTE), LTE-Advanced (LTE-A), the fifth generation (5G) New Radio (NR), the sixth generation (6G) or beyond, Wireless Fidelity (Wi-Fi) and Worldwide Interoperability for Microwave Access (WiMAX) standards, and employs any suitable communication technologies, including, for example, Multiple-Input Multiple-Output (MIMO), Orthogonal Frequency Division Multiplexing (OFDM), time division multiplexing (TDM), frequency division multiplexing (FDM), code division multiplexing (CDM), Bluetooth, ZigBee, and machine type communication (MTC), enhanced mobile broadband (eMBB), massive machine type communication (mMTC), ultra-reliable low latency communication (URLLC), Carrier Aggregation (CA), Dual Connectivity (DC), and New Radio Unlicensed (NR-U) technologies.

In some example embodiments, the terminal device 110 may determine a DRX operation status of the terminal device 110 based on whether the terminal device 110 operates in an extended DRX, eDRX, mode. Then, on this basis, the terminal device 110 and/or the network device 120 may determine a DRX cycle of the terminal device 110. In addition, the network device 120 may determine the DRX cycle of the terminal device 110 in a similar way.

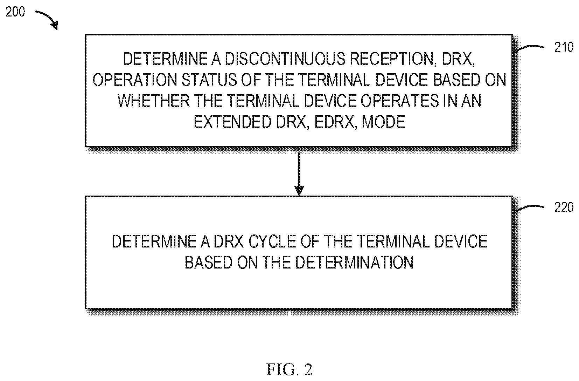

FIG. 2 illustrates an example flowchart of a method 200 implemented at a terminal device according to example embodiments of the present disclosure. For the purpose of discussion, the method 200 will be described from the perspective of the terminal device 110 with reference to FIG. 1.

At 210, the terminal device 110 determines a DRX operation status of the terminal device 110 based on whether the terminal device operates in an eDRX mode.

In the example embodiments of the present disclosure, the DRX operating status indicates whether an eDRX configured by an upper layer and/or an eDRX configured by an RRC signaling is allowed. For example, in some cases, the DRX operating status may indicate whether an eDRX configured by an upper layer is allowed or valid; in some further cases, the DRX operating status may indicate whether an eDRX configured by an RRC signaling is allowed or valid; and in other cases, the DRX operating status may indicate whether an eDRX configured by an upper layer and an eDRX configured by an RRC signaling is allowed or valid.

Then, at 220, based on the determination, the terminal device 110 determines a DRX cycle of the terminal device 110.

In some example embodiments, the DRX cycle of the terminal device is determined from one or more of: a terminal device-specific DRX cycle configured by an RRC signaling or an upper layer; a default DRX cycle broadcast in system information; a first eDRX cycle configured by an upper layer for CN paging in the RRC_idle state; a second eDRX cycle configured by an RRC signaling for RAN paging in the RRC_inactive state; or a third eDRX cycle configured by system information for RAN paging in the RRC_inactive state.

Hereinafter, only for illustrative purposes, three optional solutions as proposed herein will be described with reference to Fig. 1 in detail.

### Solution 1 (terminal device side)

In this solution, it is proposed to introduce an additional condition in a procedure of a determination of the DRX cycle, i.e., whether the terminal device is operating in the eDRX mode, or whether the terminal device is allowed to operate in the eDRX mode.

In the present invention, to determine whether operating in the eDRX mode, the terminal device 110 determines whether it is allowed to operate in an RRC_idle state or an RRC_inactive state, when the terminal device 110 is configured with the eDRX by an upper layer and/or by an RRC signaling.

As an example, the terminal device 110 may determine to operate in the eDRX mode in the RRC_idle state, when the terminal device 110 is configured with the eDRX by the upper layer, and is signaled a first indication that the eDRX is allowed in the RRC_idle state.

As another example, the terminal device 110 may determine to operate in the eDRX mode in the RRC_inactive state, when the terminal device 110 is configured with the eDRX by the RRC signaling and/or the upper layer, and is signaled a second indication that the eDRX is allowed in the RRC_inactive state.

As a further example, the terminal device 110 may operate in the eDRX mode for CN paging in RRC_idle state or RRC_inactive states if the terminal device is configured with the eDRX by the upper layer and, for example, "eDRX-AllowedIdle", is signaled in system information, such as a system information block 1 (SIB1). The indication "eDRX-AllowedIdle" is an indication carried in SIB1, which is used to allow the terminal device 110 to perform the eDRX in the RRC_idle state.

As a still further example, the terminal device 110 may operate in the eDRX mode for RAN paging in the RRC_inactive state if the terminal device 110 is configured with the eDRX by an RRC signaling and, for example, eDRX_AllowedInactive is signaled in system information, such as the SIB1. The indication "eDRX-AllowedInactive" is an indication carried in SBI1, which is used to allow the terminal device to perform the eDRX in the RRC_inactive state.

Alternatively or additionally, the terminal device 110 may operate in the eDRX mode for RAN paging in the RRC_inactive state if the terminal device 110 is configured with the eDRX by an RRC signaling and, for example, eDRX_AllowedInactive signaled in system information, such as the SIB1, is allowed.

As a further example, the terminal device 110 may operate in the eDRX mode for CN paging in the RRC_inactive state if the terminal device 110 is configured with the eDRX by the upper layer and, for example, "eDRX_AllowedIdle" is signaled in system information, such as the SIB1. The indication "eDRX-AllowedIdle" is an indication carried in SBI1, which is used to allow the terminal device to perform the eDRX in the RRC_inactive state.

Alternatively or additionally, the terminal device 110 may operate in the eDRX mode for CN paging in the RRC_inactive state if the terminal device 110 is configured with the eDRX by the upper layer and, for example, "eDRX_AllowedIdle" signaled in system information, such as the SIB1, is allowed.

In some example embodiments, the DRX cycle of the terminal device 110 may be determined from one or more of: a terminal device-specific DRX cycle configured by an RRC signaling or an upper layer; a default DRX cycle broadcast in system information; a first eDRX cycle configured by an upper layer for CN paging in the RRC_idle state or RRC_inactive state; or a second eDRX cycle configured by an RRC signaling for RAN paging in the RRC_inactive state.

As an example, the terminal device 110 may determine that it does not operate in the eDRX mode. In this case, the DRX cycle of the terminal device 110 may be determined as the shortest one of the terminal device-specific DRX cycle, and the default DRX cycle.

As an example, if the terminal device 110 may determine that it operates in the eDRX mode in the RRC idle state and the first eDRX cycle is not longer than a pre-determined number of radio frames ( such as 1024 radio frames) the DRX cycle of the terminal device 110 may be determined as the first eDRX cycle.

As an example, if the terminal device 110 determines that it operates in the eDRX mode in the RRC idle state and the first eDRX cycle is equal to or longer than a pre-determined number of radio frames, the DRX cycle of the terminal device 110 may be determined as the shortest one of the terminal device-specific DRX cycle, and the default DRX, during a paging time window, PTW, configured by the upper layer.

As an example, if the terminal device 110 determines that it operates in the eDRX mode in the RRC inactive state and the first eDRX cycle and the second eDRX cycle are not longer than a pre-determined number of radio frames, the DRX cycle of the terminal device 110 may be determined as the shortest one of the first eDRX cycle and the second eDRX cycle.

As an example, if the terminal device 110 determines that it operates in the eDRX mode in the RRC inactive state and the terminal device 110 is configured with only the first eDRX cycle not longer than a pre-determined number of radio frames, the DRX cycle of the terminal device 110 may be determined as: the shortest one of the terminal device-specific DRX cycle and the first eDRX cycle.

As an example, if the terminal device 110 determines that it operates in the eDRX mode in the RRC inactive state and the terminal device 110 is configured with only the first eDRX cycle which is equal to or longer than a pre-determined number of radio frames, the DRX cycle of the terminal device 110 may be determined as:
- the shortest one of the terminal device-specific DRX cycle, and the default DRX cycle, during a PTW; or
- the terminal device-specific DRX cycle, outside the PTW.

As an example, if the terminal device 110 determines that it operates in the eDRX mode in the RRC inactive state and the terminal device 110 is configured with the first eDRX cycle which is equal to or longer than a pre-determined number of radio frames, and with the second eDRX cycle which is not longer than the pre-determined number of radio frames, the DRX cycle of the terminal device 110 may be determined as:
- the shortest one of the terminal device-specific DRX cycle, the second eDRX cycle, and the default DRX cycle, during a PTW; or
- the second eDRX cycle, outside the PTW.

As a more specific example, the determination of the DRX cycle, for example, in the procedure in the current related 3GPP technical specification (TS) 38.304 section 7.1, may be amended as follows:

### Example Procedure 1:

| | | | |
|---|---|---|---|
| | | | If **the UE is not operating in** eNDRX as defined in clause 7.4: |
| | | | - T is determined by the shortest of the UE specific DRX value(s), if configured by RRC and/or upper layers or provided in PC5-RRC signaling in case of a L2 U2N Relay UE, and a default DRX value broadcast in system information. In RRC_IDLE state, if UE specific DRX is not configured by upper layers, the default value is applied. |
| | | | In RRC_IDLE state, if **the UE is operating in eDRX and** eDRX is configured by upper layers, i.e., T_{eDRX, CN}, according to clause 7.4: |
| | - If T_{eDRX, CN} is no longer than 1024 radio frames: | | |
| | | - T = T_{eDRX, CN}; | |
| | - else: | | |
| | | - During CN configured PTW, T is determined by the shortest of UE specific DRX value, if configured by upper layers, and the default DRX value broadcast in system information. | |
| | In RRC_INACTIVE state, if **the UE is operating in eDRX and** eDRX is configured by RRC, i.e., T_{eDRX, RAN} , and/or upper layers, i.e., T_{eDRX, CN}, as defined in clause 7.4: | | |
| | - If both T_{eDRX, CN} and T_{eDRX, RAN} are no longer than 1024 radio frames, T = min{T_{eDRX, RAN}, T_{eDRX,} CN . | | |
| | - If T_{eDRX, CN} is no longer than 1024 radio frames and no T_{eDRX, RAN} is configured, T is determined by the shortest of UE specific DRX value configured by RRC and T_{eDRX, CN}. | | |
| | - If T_{eDRX, CN} is longer than 1024 radio frames: | | |
| | | - If T_{eDRX, RAN} is not configured: | |
| | | | - During CN configured PTW, T is determined by the shortest of the UE specific DRX value (s), if configured by RRC and/or upper layers, and a default DRX value broadcast in system information. Outside the CN configured PTW, T is determined by the UE specific DRX value configured by RRC; |
| | | - else if T_{eDRX, RAN} is no longer than 1024 radio frames: | |
| | | | - During CN configured PTW, T is determined by the shortest of the UE specific DRX value, if configured by upper layers and T_{eDRX, RAN}, and a default DRX value broadcast in system information. Outside the CN configured PTW, T is determined by T_{eDRX, RAN}. |
| Note: T denotes the DRX cycle of the UE. | | | |
| The underline means an addition of new contents and the strikethrough means a deletion of original contents. | | | |

It is to be noted that in the above procedure, "the UE is not operating in eDRX" may include that neither an eDRX is configured by an upper layer nor an eDRX configured by an RRC signaling is allowed.

It is to be noted that in the above procedure, "the UE is operating in eDRX" may include that an eDRX is configured by an upper layer and/or an eDRX configured by an RRC signaling is allowed.

By this solution, the procedure of determination of the DRX cycle is not changed but the conditions are changed by further considering whether the UE is operating in an eDRX mode or not. In this way, it may address the issues caused by the un-synchorization between the eDRX configuration and the eDRX allowance. Therefore, it may facilitate the accurate determination of the DRX cycle, thereby improving the transmission efficiency for the eDRX. Meanwhile, it is possible to ensure synchronization of the DRX cycle at both network and terminal sides.

### Solution 2 (terminal device side)

Different from Solution 1, this solution is proposed to configure the eDRX by the RRC signaling (from the RAN) in SI, so that it may be signaled together with the indication "eDRX-AllowedIdle" / "eDRX-AllowedInactive". Therefore, it is related to the eDRX configured by the RAN and in turn, focuses on the RRC_inactive state cases.

In some example embodiments, solution 2 may be used by replacing the DRX cycle determination when the terminal device is in the RRC inactive state and the DRX is configured by the RAN in the existing determination procedure. In some example embodiments, solution 2 may be used by replacing the DRX cycle determination when the terminal device is in the RRC inactive state and the DRX is configured by the RAN in solution 1.

Particularly, in this solution 2, an eDRX configuration by a RAN may be signaled in system information. For example, the information system may comprise SIB1.

In some example embodiments, the terminal device 110 may receive, from the network device 120, the eDRX configuration by the RAN and a second indication that the eDRX mode is allowed in the RRC_inactive state in the system information. Then, the terminal device 110 may determine that it operates in the eDRX mode in the RRC_inactive state when receiving the second indication and the eDRX configuration by the RAN.

In other words, the network device 120 may transmit the second indication and the eDRX configuration in the same system information (SI), for example, SIB 1, to enable the terminal device 110 to obtain both the eDRX configuration and the allowance indication simultaneously. In such a way, there is no un-synchronization between the eDRX configuration and the allowance indication.

In some example embodiments, the eDRX configured by RRC may not be transmitted in the SI if the "eDRX-AllowedInactive" is set as disabled or not allowed, and the eDRX configured by RRC is treated as not configured in such case.

In some example embodiments, the terminal device 110 may update an eDRX configuration of the terminal device according to the eDRX configuration by the RAN in the system information after the terminal device acquiring the system information.

In this case, the approach to determine the DRX cycle of the terminal device 110 may be similar to the determination approach as discussed in solution 1, with the only change to replace the second eDRX cycle configured by an RRC signaling with a third eDRX cycle configured by system information. In other word, "T_{eDRX, RAN}" in the above example procedure or in the 3GGP standard will be a value configured by SIB1 and meanwhile all wording "eDRX is configured by RRC" shall be replaced by eDRX is configured by RAN or system information/SI or SIB1.

As a more specific example, the determination of the DRX cyle, for example, in the procedure in the current related 3GPP TS 38.304 section 7.1, may be amended as follows:

### Example Procedure 2:

| | | | |
|---|---|---|---|
| | | If eDRX is not configured as defined in clause 7.4: | |
| | | - T is determined by the shortest of the UE specific DRX value(s), if configured by RRC and/or upper layers or provided in PC5-RRC signaling in case of a L2 U2N Relay UE, and a default DRX value broadcast in system information. In RRC_IDLE state, if UE specific DRX is not configured by upper layers, the default value is applied. | |
| | | In RRC_IDLE state, if eDRX is configured by upper layers, i.e., T_{eDRX, CN}, according to clause 7.4: | |
| - If T_{eDRX, CN} is no longer than 1024 radio frames: | | | |
| | | | - T = T_{eDRX, CN}; |
| - else: | | | |
| | | | - During CN configured PTW, T is determined by the shortest of UE specific DRX value, if configured by upper layers, and the default DRX value broadcast in system information. |
| | In RRC_INACTIVE state, if eDRX is configured by **SI;** i.e., T_{eDRX, SI} , and/or upper layers, i.e., T_{eDRX, CN}, as defined in clause 7.4: | | |
| | - If both T_{eDRX, CN} and T_{eDRX, SI} are no longer than 1024 radio frames, T = min{ T_{eDRX, SI}, T_{eDRX,} CN . | | |
| | - If T_{eDRX, CN} is no longer than 1024 radio frames and no T_{eDRX, SI} is configured, T is determined by the shortest of UE specific DRX value configured by RRC and T_{eDRX, CN}. | | |
| | - If T_{eDRX, CN} is longer than 1024 radio frames: | | |
| | | - If T_{eDRX, SI} is not configured: | |
| | | | - During CN configured PTW, T is determined by the shortest of the UE specific DRX value (s), if configured by RRC and/or upper layers, and a default DRX value broadcast in system information. Outside the CN configured PTW, T is determined by the UE specific DRX value configured by RRC; |
| | | - else if T_{eDRX, SI} is no longer than 1024 radio frames: | |
| | | | - During CN configured PTW, T is determined by the shortest of the UE specific DRX value, if configured by upper layers and T_{eDRX, SI}, and a default DRX value broadcast in system information. Outside the CN configured PTW, T is determined by T_{eDRX, SI}. |
| Note: T denotes the DRX cycle of the UE. | | | |

The procedure of SI acquiring may also need to be changed as eDRX configuration updating procedure above and will not elaborate here.

As another example, for example in example procedure 1, "In RRC_inactive state, if the UE is operating in eDRX and eDRX is configured by RRC," may be changed back to "In RRC_ inactive state, if eDRX is configured by RRC" and meanwhile "RRC" recited therein may be replaced with "system information," "SI," "SIB 1," etc. in a similar way to example procedure 2. For the purpose of simplification, the details will be omitted.

### Solution 3 (terminal device side)

In Solution 3, is further proposed another different solution, which aims to further check the validity of the eDRX configuration without changing the procedure of determination of the DRX cycle in the existing solution.

Particularly, in this solution 3, the main enhancement is that there is a need to determine a validity of an eDRX configured by an upper layer and/or an RRC signaling based on whether the eDRX is allowed in the RRC_idle state or the RRC_inactive state. Then, based on the validity, the terminal device 110 may determine whether it operates in the eDRX mode.

For example, the terminal device may determine the eDRX configured by the upper layer in the RRC_idle state as valid, when it is signaled a first indication (such as "eDRX-AllowedIdle" ) that the eDRX mode is allowed in the RRC_idle state.

As another example, the terminal device 110 may determine the eDRX configured by the RRC signaling and/or the upper layer in the RRC_inactive state as valid, if it is signaled a second indication (such as "eDRX-AllowedInactive") that the eDRX is allowed in the RRC_inactive state.

Then, the DRX cycle may be determined based on whether the eDRX configured by the RRC signaling and/or the upper layer is valid.

As a more specific example, the determination of the DRX cycle, for example, in the procedure in the current related 3GPP TS 38.304 section 7.1, may be amended as follows:

### Example Procedure 3:

| | | | |
|---|---|---|---|
| | | If **eDRX configured by RRC and/or upper layers is invalid or** eDRX is not configured as defined in clause 7.4: | |
| | | - T is determined by the shortest of the UE specific DRX value(s), if configured by RRC and/or upper layers or provided in PC5-RRC signaling in case of a L2 U2N Relay UE, and a default DRX value broadcast in system information. In RRC _IDLE state, if UE specific DRX is not configured by upper layers, the default value is applied. | |
| | | In RRC_IDLE state, if eDRX is configured by upper layers, i.e., T_{eDRX, CN}, according to clause 7.4 is valid: | |
| | | - If T_{eDRX, CN} is no longer than 1024 radio frames: | |
| | | | - T = T_{eDRX, CN}; |
| | | - else: | |
| | | | - During CN configured PTW, T is determined by the shortest of UE specific DRX value, if configured by upper layers, and the default DRX value broadcast in system information. |
| | In RRC_INACTIVE state, if eDRX configured by RRC; i.e., T_{eDRX, RAN} , and/or upper layers, i.e., T_{eDRX, CN}, as defined in clause 7.4 is valid: | | |
| | - If both T_{eDRX, CN} and T_{eDRX, RAN} are no longer than 1024 radio frames, T = min{T_{eDRX, RAN}, T_{eDRX,} CN . | | |
| | - If T_{eDRX, CN} is no longer than 1024 radio frames and no T_{eDRX, RAN} is configured, T is determined by the shortest of UE specific DRX value configured by RRC and T_{eDRX, CN}. | | |
| | - If T_{eDRX, CN} is longer than 1024 radio frames: | | |
| | | - If T_{eDRX, RAN} is not configured: | |
| | | | - During CN configured PTW, T is determined by the shortest of the UE specific DRX value (s), if configured by RRC and/or upper layers, and a default DRX value broadcast in system information. Outside the CN configured PTW, T is determined by the UE specific DRX value configured by RRC |
| | | - else if T_{eDRX, RAN} is no longer than 1024 radio frames: | |
| | | | - During CN configured PTW, T is determined by the shortest of the UE specific DRX value, if configured by upper layers and T_{eDRX, RAN}, and a default DRX value broadcast in system information. Outside the CN configured PTW, T is determined by T_{eDRX, RAN}. |
| Note: T denotes the DRX cycle of the UE. | | | |

The procedure of SI acquiring may also need to be changed. For example, the eDRX configuration may be set as valid or invalid depending on the "eDRX-AllowedIdle" and/or the "eDRX-AllowedInactive" is set as "allowed" or "not allowed" in the SI, e.g. in SIB1.

In the above example procedure, the main changes lie in that the conditional "eDRX is configured by..." is changed to "eDRX configured by... is valid." Therefore, in this solution, the eDRX configuration is valid only when such configuration is allowed by, for example, the "eDRX-AllowedIdle" and/or the "eDRX-AllowedInactive".

Similarly to example procedure 1, it may address the issues caused by the un-synchronization between the eDRX configuration and the eDRX allowance. Therefore, it may facilitate the accurate determination of the DRX cycle, thereby improving the transmission efficiency for the eDRX. Meanwhile, it is possible to ensure synchronization of the DRX cycle at both network and terminal sides.

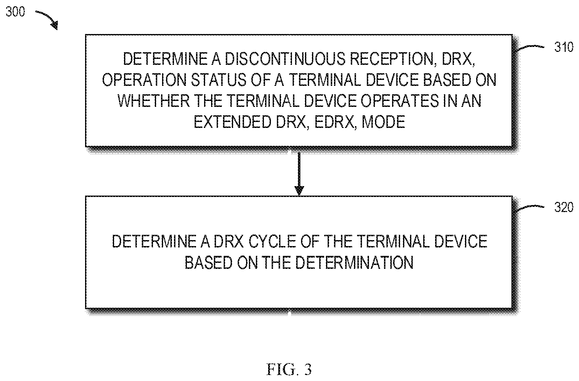

For the DRX operation or the eDRX operation, the network device 120 needs to know. the DRX cycle too. Therefore, the network device 120 may determine the DRX cycle too. Hereinafter, reference will be made to FIG. 3 to describe the solution of DRX cycle determination at the network device 120 with reference to FIG. 1.

FIG. 3 shows a flowchart of an example method 3 implemented at a network device according to example embodiments of the present disclosure. For the purpose of discussion, the method 300 will be described from the perspective of the network device 120 with reference to FIG. 1.

At 310, the network device 120 determines a DRX operation status of a terminal device 110 based on whether the terminal device 110 operates in an extended DRX, eDRX, mode.

In the example embodiments of the present disclosure, the DRX operating status may indicate whether an eDRX configured by an upper layer and/or an eDRX configured by an RRC signaling is allowed. For example, in some cases, the DRX operating status may indicate whether an eDRX configured by an upper layer is allowed or valid; in some further cases, the DRX operating status may indicate whether an eDRX configured by an RRC signaling is allowed or valid; and in other cases, the DRX operating status may indicate whether an eDRX configured by an upper layer and an eDRX configured by an RRC signaling is allowed or valid.

Then, at 320, based on the determination, the network device 120 determines a DRX cycle of the terminal device 110.

In some example embodiments, the DRX cycle of the terminal device may be determined from one or more of: a terminal device-specific DRX cycle configured by an RRC signaling or an upper layer; a default DRX cycle broadcast in system information; a first eDRX cycle configured by an upper layer for CN paging in the RRC_idle state or RRC_inactive state; a second eDRX cycle configured by an RRC signaling for RAN paging in the RRC_inactive state; or a third eDRX cycle configured by system information for RAN paging in the RRC_inactive state.

Similarly, the above three solutions are applicable to the network side to improve the determination of the DRX cycle of the terminal device 110. Thus, by following a similar DRX cycle determination approach, the network device 110 and the terminal device 120 may have the same understanding of the DRX cycle of the terminal device 110.

### Solution 1 (network device side)

Similar to solution 1 at the terminal device, this solution introduces an additional condition in a procedure of a determination of the DRX cycle, i.e., whether the terminal device is operating in the eDRX mode, or whether the terminal device is allowed to operate in the eDRX mode.

In some example embodiments, to determine whether the terminal device 110 operates in the eDRX mode, the network device 120 may determine whether the terminal device 110 is allowed to operate in an RRC_idle state or an RRC_inactive state, when the terminal device 110 is configured with the eDRX by an upper layer and/or by an RRC signaling.

As an example, the network device 120 may determine the terminal device 110 to operate in the eDRX mode in the RRC_idle state, when the terminal device 110 is configured with the eDRX by the upper layer, and is signaled a first indication that the eDRX is allowed in the RRC_idle state.

As another example, the network device 120 may determine the terminal device 110 to operate in the eDRX mode in the RRC_inactive state, when the terminal device 110 is configured with the eDRX by the RRC signaling and/or the upper layer, and is signaled a second indication that the eDRX is allowed in the RRC_inactive state.

As a further example, the network device 120 may determine that the terminal device 110 operates in the eDRX mode for CN paging in RRC_idle state or RRC_inactive states if the terminal device is configured with the eDRX by the upper layer and the first indication (for example, an indication called "eDRX-AllowedIdle") is signaled in system information, such as a SIB1.

As another example, the network device 120 may determine that the terminal device 110 operates in the eDRX mode for RAN paging in RRC_inactive state if the terminal device 110 is configured with the eDRX by an RRC signaling and the second indication (for example, an indication called "eDRX-AllowedInactive") is signaled in system information, such as the SIB1.

In some example embodiments, the network device 120 may determine the DRX cycle of the terminal device 110 from one or more of: a terminal device-specific DRX cycle configured by an RRC signaling or an upper layer; a default DRX cycle broadcast in system information; a first eDRX cycle configured by an upper layer for CN paging in the RRC_idle state or RRC_inactive state; or a second eDRX cycle configured by an RRC signaling for RAN paging in RRC_ inactive state.

At the network side, the determination approach of the DRX cycle of the terminal device 110 may follow the same principles for the terminal device when determining the DRX cycle as discussed in solution 1 with reference to FIG. 2. The details will not be repeated for simplification and one may refer to the description with reference to FIG. 2 for the details.

### Solution 2 (network device side)

Similar to solution 2 at the terminal device side, this solution is proposed to change the eDRX configured by the RRC signaling (from the RAN) to system information (SI), so that it may be signaled together with the indication "eDRX-AllowedIdle" / "eDRX-AllowedInactive".

Particularly, solution 2 may focus on the RRC_inactive case. In this solution 2, the network device 120 may signal an eDRX configuration by a RAN may in system information. For example, the information system may comprise SIB1.

In some example embodiments, the network device 120 may transmit, to the terminal device 110, the eDRX configuration by a RAN and a second indication that the eDRX mode is allowed in the RRC_inactive stat in the system information. Then, the network device 120 may determine the terminal device 110 to operate in the eDRX mode in the RRC_inactive state based on a determination that the terminal device 110 is signaling the second indication and the eDRX configuration by the RAN in the system information.

In some example embodiments, the network device 120 may update the eDRX configured by the RAN of the terminal device 110 in the system information according to the eDRX configuration by the RAN and the second indication transmitted the system information to the terminal device 110.

Likewise, in this case, the approach to determine the DRX cycle of the terminal device 110 may be similar to the determination approach as discussed in solution 2, with the only change to replace the second eDRX cycle configured by an RRC signaling with a third eDRX cycle configured by system information. For the purpose of simplification, the details will be omitted and one may refer to the description with reference to FIG. 2 for the details.

### Solution 3 (network device side)

Similar to solution 3 at the terminal device side, in this solution is further proposed another different solution, which aims to further check the validity of the eDRC configuration without changing the procedure of determination of the DRX cycle in the existing solution.

Particularly, in this solution 3, the main enhancement is that there is a need to determine a validity of an eDRX configured by an upper layer and/or an RRC signaling based on whether the eDRX is allowed in the RRC_idle state or the RRC_inactive state. Then, based on the validity, the network device 120 may determine whether the terminal device 110 operates in the eDRX mode.

For example, the network device 120 may determine the eDRX configuration in the RRC_idle state as valid when the terminal device 110 is signaled a first indication that the eDRX mode is allowed in the RRC_idle state. As another example, the network device 120 may determine the eDRX transmitted in the RRC signaling in the RRC_inactive state as valid when the terminal device 110 is signaled the first indication and/or a second indication that the eDRX is allowed in the RRC_inactive state.

Then, the DRX cycle may be determined based on whether the eDRX configured by the RRC signaling is valid.

Likewise, in this case, the approach to determine the DRX cycle of the terminal device 110 may be similar to the determination approach as discussed in solution 3, with the only change to replace the second eDRX cycle configured by an RRC signaling with a third eDRX cycle configured by system information. For the purpose of simplification, the details will be omitted and one may refer to the description with reference to FIG. 2 for the details.

In some example embodiments, an apparatus capable of performing any of operations of the method 200 (for example, the terminal device 110) may include means for performing the respective steps of the method 200. The means may be implemented in any suitable form. For example, the means may be implemented in a circuitry or software module.

In some example embodiments, the apparatus may include means for determining a discontinuous reception, DRX, operation status of the terminal device based on whether the terminal device operates in an extended DRX, eDRX, mode; and means for determining a DRX cycle of the terminal device based on the determination.

In some example embodiments, the DRX operating status may indicate whether an eDRX configured by an upper layer and/or an eDRX configured by a radio resource control, RRC signaling is allowed.

In some example embodiments, the apparatus may comprise means for determining to operate in the eDRX mode by: determining that the terminal device operates in an RRC_idle state or an RRC_inactive state, and the terminal device is configured with the eDRX by an upper layer and/or by an RRC signaling.

In some example embodiments, the apparatus may comprise means for determining to operate in the eDRX mode in the RRC_idle state, when the terminal device is configured with the eDRX by the upper layer, and is signaled a first indication that the eDRX is allowed in the RRC_idle state.

In some example embodiments, the apparatus may comprise means for determining to operate in the eDRX mode in the RRC_inactive state, when the terminal device is configured with the eDRX by the RRC signaling and/or the upper layer, and is signaled a second indication that the eDRX is allowed in the RRC_inactive state.

In some example embodiments, the apparatus may comprise means for determining to operate in the eDRX mode in the RRC_inactive state when the terminal device is signaled, in system information, a second indication that the eDRX mode is allowed in the RRC_inactive state, and the system information may further comprise an eDRX configuration by a radio access network, RAN.

In some example embodiments, the apparatus may further comprise means for receiving the eDRX configuration by the RAN and the second indication in the system information, and the information system comprises system information block 1, SIB1.

In some example embodiments, the apparatus may further comprise means for updating an eDRX configuration of the terminal device according to the eDRX configuration by the RAN in the system information after the terminal device acquiring the system information.

In some example embodiments, the apparatus may comprise means for determining the terminal device operates in an eDRX mode for a core network, CN, paging in RRC_idle or RRC_inactive states if the terminal device is configured for eDRX by an upper layer and eDRX-AllowedIdle is signaled in SIB1.

In some example embodiments, the apparatus may comprise means for determining the terminal device operates in an eDRX mode for RAN paging in an RRC_inactive state if the terminal device is configured for eDRX by a RAN and eDRX-AllowedInactive is signaled in SIB1.

In some example embodiments, the apparatus may comprise means for determining to operate in the eDRX mode by: determining a validity of an eDRX configured by an upper layer and/or an RRC signaling based on whether the eDRX is allowed in the RRC_idle state or the RRC_inactive state.

In some example embodiments, the apparatus may further comprise means for determining the eDRX configured by the upper layer in the RRC_idle state as valid when the terminal device is signaled a first indication that the eDRX mode is allowed in the RRC_idle state.

In some example embodiments, the apparatus may further comprise means for determining the eDRX configured by the RRC signaling and/or the upper layer in the RRC_inactive state as valid when the terminal device is signaled a second indication that the eDRX is allowed in the RRC_inactive state.

In some example embodiments, the DRX cycle may be determined based on whether the eDRX configured by the RRC signaling and/or the upper layer is valid.

In some example embodiments, the DRX cycle of the terminal device may be determined from one or more of: a terminal device-specific DRX cycle configured by an RRC signaling or an upper layer; a default DRX cycle broadcast in system information; a first eDRX cycle configured by an upper layer for CN paging in an RRC_idle state or an RRC_inactive state; a second eDRX cycle configured by an RRC signaling for RAN paging in an RRC_inactive state; or a third eDRX cycle configured by system information for RAN paging in an RRC_inactive state.

In some example embodiments, the apparatus may further comprise means for performing other steps in some embodiments of the method 200. In some example embodiments, the means comprises at least one processor and at least one memory including computer program code. The at least one memory and computer program code are configured to, with the at least one processor, cause the performance of the apparatus.

In some example embodiments, an apparatus capable of performing any of the method 300 (for example, the network device 120) may include means for performing the respective steps of the method 300. The means may be implemented in any suitable form. For example, the means may be implemented in a circuitry or software module.

In some example embodiments, the apparatus may further comprise means for determining a discontinuous reception, DRX, operation status of a terminal device based on whether the terminal device operates in an extended DRX, eDRX, mode; and means for determining a DRX cycle of the terminal device based on the determination.

In some example embodiments, the DRX operating status may indicate whether an eDRX configured by an upper layer and/or an eDRX configured by a radio resource control, RRC signaling is allowed.

In some example embodiments, the apparatus may further comprise means for determining that the terminal device operates in the eDRX mode. The means for determining that the terminal device operates in the eDRX mode may comprise: means for determining that the terminal device operates in an RRC_idle state or an RRC_inactive state, and the terminal device is configured with the eDRX by an upper layer and/or by an RRC signaling.

In some example embodiments, the apparatus may comprise means for determining the terminal device to operate in the eDRX mode in the RRC_idle state, when the terminal device is configured with the eDRX by the upper layer, and is signaled a first indication that the eDRX is allowed in the RRC_idle state.

In some example embodiments, the apparatus may comprise means for determining the terminal device to operate in the eDRX mode in the RRC_inactive state, when the terminal device is configured with the eDRX by the RRC signaling and/or the upper layer, and is signaled a second indication that the eDRX is allowed in the RRC_inactive state.

In some example embodiments, the apparatus may comprise means for determining the terminal device to operate in the eDRX mode in the RRC_inactive state when the terminal device is signaled, in system information, a second indication that the eDRX mode is allowed in the RRC_inactive state, and the system information further comprises an eDRX configuration by a radio access network, RAN.

In some example embodiments, the apparatus may further comprise means for transmitting the eDRX configuration by the RAN and the second indication in the system information, and the information system comprises system information block 1, SIB1.

In some example embodiments, the apparatus may further comprise means for updating the eDRX configured by the RAN of the terminal device in the system information according to the eDRX configuration by the RAN and the second indication transmitted the system information to the terminal device.

In some example embodiments, the apparatus may comprise means for determining the terminal device to operate in an eDRX mode for a core network, CN, paging in RRC_idle or RRC_inactive states if the terminal device is configured for eDRX by an upper layer and eDRX-AllowedIdle is signaled in SIB1.

In some example embodiments, the apparatus may comprise means for determining the terminal device to operate in an eDRX mode for RAN paging in an RRC_inactive state if the terminal device is configured for eDRX by a RAN and eDRX-AllowedInactive is signaled in SIB1.

In some example embodiments, the means for determining the terminal device to operate in the eDRX mode may comprise: means for determining a validity of an eDRX configured by an upper layer and/or an RRC signaling based on whether the eDRX is allowed in the RRC_idle state or the RRC_inactive state.

In some example embodiments, the apparatus may further comprise means for determining the eDRX configuration in the RRC_idle state as valid when the terminal device is signaled a first indication that the eDRX mode is allowed in the RRC_idle state.

In some example embodiments, the apparatus may further comprise means for determining the eDRX transmitted in the RRC signaling in the RRC_inactive state as valid when the terminal device is signaled the first indication and/or a second indication that the eDRX is allowed in the RRC_inactive state.

n some example embodiments, the DRX cycle may be determined based on whether the eDRX configured by the RRC signaling is valid.

n some example embodiments, the DRX cycle of the terminal device may be determined from one or more of: a terminal device-specific DRX cycle configured by an RRC signaling or an upper layer; a default DRX cycle broadcast in system information; a first eDRX cycle configured by an upper layer for CN paging in an RRC_idle state or an RRC_inactive state; a second eDRX cycle configured by an RRC signaling for RAN paging in an RRC_inactive state; or a third eDRX cycle configured by system information for RAN paging in an RRC_inactive state.

In some example embodiments, the apparatus may further comprise means for performing other steps in some embodiments of the method 300. In some example embodiments, the means comprises at least one processor and at least one memory including computer program code. The at least one memory and computer program code are configured to, with the at least one processor, cause the performance of the apparatus.

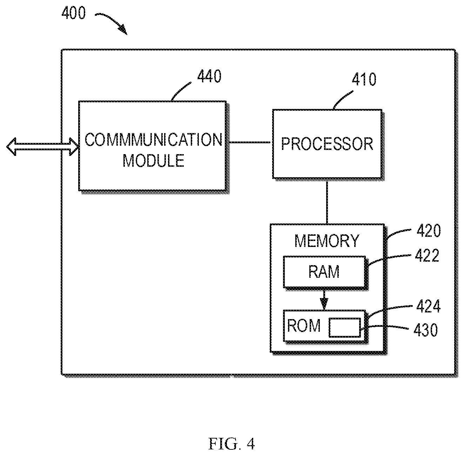

FIG. 4 is a simplified block diagram of a device 400 that is suitable for implementing embodiments of the present disclosure. The device 400 may be provided to implement the communication device, for example the terminal device 40 or the network device 120 as shown in FIG. 1. As shown, the device 400 includes one or more processors 410, one or more memories 420 coupled to the processor 410, and one or more transmitters and/or receivers (TX/RX) 440 coupled to the processor 410.

The TX/RX 440 is for bidirectional communications. The TX/RX 440 has at least one antenna to facilitate communication. The communication interface may represent any interface that is necessary for communication with other network elements. The communication interface may be hardware or software based interface. For example, the communication interface may be one ore more transceivers. The one or more transceivers may be coupled to one or more antennas or antenna ports to wirelessly transmit and/or receive communication signals. The antennas or antenna ports may be the same or different types. The antennas or antenna ports may be located in different positions of an apparatus. The one or more transceivers allow the apparatus to communicate with other devices that may be wired and/or wireless. The transceiver may support one or more radio technologies. For example, the one or more transceivers may include a cellular subsystem, a WLAN subsystem, and/or a BluetoothTM subsystem. The one or more transceivers may include processors, controllers, radios, sockets, plugs, buffers, or the like circuits to form one or more communication channels to one or more radio frequency units.

The processor 410 may be of any type suitable to the local technical network and may include one or more of the following: general purpose computers, special purpose computers, microprocessors, digital signal processors (DSPs) and processors based on multicore processor architecture, as non-limiting examples. The device 400 may have multiple processors, such as an application specific integrated circuit chip that is slaved in time to a clock which synchronizes the main processor.

The memory 420 may include one or more non-volatile memories and one or more volatile memories. Examples of the non-volatile memories include, but are not limited to, a read only memory (ROM) 424, an electrically programmable read only memory (EPROM), a flash memory, a hard disk, a compact disc (CD), a digital video disk (DVD), and other magnetic storage and/or optical storage. Examples of the volatile memories include, but are not limited to, a random access memory (RAM) 422 and other volatile memories that will not last in the power-down duration.

A computer program 430 includes computer executable instructions that are executed by the associated processor 410. The program 430 may be stored in the ROM 424. The processor 410 may perform any suitable actions and processing by loading the program 430 into the RAM 422.

The embodiments of the present disclosure may be implemented by means of the program so that the device 400 may perform any process of the disclosure as discussed with reference to FIGs. 2 to 3. The embodiments of the present disclosure may also be implemented by hardware or by a combination of software and hardware.

In some example embodiments, the program 430 may be tangibly contained in a computer readable medium which may be included in the device 400 (such as in the memory 420) or other storage devices that are accessible by the device 400. The device 400 may load the program 430 from the computer readable medium to the RAM 422 for execution. The computer readable medium may include any types of tangible non-volatile storage, such as ROM, EPROM, a flash memory, a hard disk, CD, DVD, and the like.

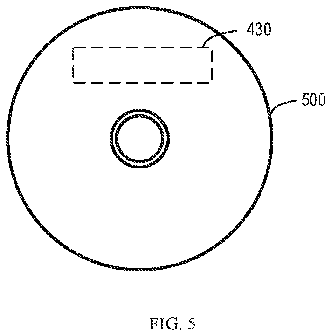

FIG. 5 shows an example of the computer readable medium 500 in form of CD or DVD. The computer readable medium has the program 430 stored thereon.

Generally, various embodiments of the present disclosure may be implemented in hardware or special purpose circuits, software, logic or any combination thereof. Some aspects may be implemented in hardware, while other aspects may be implemented in firmware or software which may be executed by a controller, microprocessor or other computing device. While various aspects of embodiments of the present disclosure are illustrated and described as block diagrams, flowcharts, or using some other pictorial representations, it is to be understood that the block, apparatus, system, technique or method described herein may be implemented in, as non-limiting examples, hardware, software, firmware, special purpose circuits or logic, general purpose hardware or controller or other computing devices, or some combination thereof.

The present disclosure also provides at least one computer program product tangibly stored on a non-transitory computer readable storage medium. The computer program product includes computer-executable instructions, such as those included in program modules, being executed in a device on a target real or virtual processor, to carry out the method 200 or 300 as described above with reference to FIG. 2 and FIG. 3. Generally, program modules include routines, programs, libraries, objects, classes, components, data structures, or the like that perform particular tasks or implement particular abstract data types. The functionality of the program modules may be combined or split between program modules as desired in various embodiments. Machine-executable instructions for program modules may be executed within a local or distributed device. In a distributed device, program modules may be located in both local and remote storage media.

Program code for carrying out methods of the present disclosure may be written in any combination of one or more programming languages. These program codes may be provided to a processor or controller of a general purpose computer, special purpose computer, or other programmable data processing apparatus, such that the program codes, when executed by the processor or controller, cause the functions/operations specified in the flowcharts and/or block diagrams to be implemented. The program code may execute entirely on a machine, partly on the machine, as a stand-alone software package, partly on the machine and partly on a remote machine or entirely on the remote machine or server.

In the context of the present disclosure, the computer program codes or related data may be carried by any suitable carrier to enable the device, apparatus or processor to perform various processes and operations as described above. Examples of the carrier include a signal, computer readable medium, and the like.

The computer readable medium may be a computer readable signal medium or a computer readable storage medium. A computer readable medium may include but not limited to an electronic, magnetic, optical, electromagnetic, infrared, or semiconductor system, apparatus, or device, or any suitable combination of the foregoing. More specific examples of the computer readable storage medium would include an electrical connection having one or more wires, a portable computer diskette, a hard disk, a random access memory (RAM), a read-only memory (ROM), an erasable programmable read-only memory (EPROM or Flash memory), an optical fiber, a portable compact disc read-only memory (CD-ROM), an optical storage device, a magnetic storage device, or any suitable combination of the foregoing. The term "non-transitory," as used herein, is a limitation of the medium itself (i.e., tangible, not a signal) as opposed to a limitation on data storage persistency (e.g., RAM vs. ROM).

Further, while operations are depicted in a particular order, this should not be understood as requiring that such operations be performed in the particular order shown or in sequential order, or that all illustrated operations be performed, to achieve desirable results. In certain circumstances, multitasking and parallel processing may be advantageous. Likewise, while several specific implementation details are contained in the above discussions, these should not be construed as limitations on the scope of the present disclosure, but rather as descriptions of features that may be specific to particular embodiments. Certain features that are described in the context of separate embodiments may also be implemented in combination in a single embodiment. Conversely, various features that are described in the context of a single embodiment may also be implemented in multiple embodiments separately or in any suitable sub-combination.

Although the present disclosure has been described in languages specific to structural features and/or methodological acts, it is to be understood that the present disclosure defined in the appended claims is not necessarily limited to the specific features or acts described above. Rather, the specific features and acts described above are disclosed as example forms of implementing the claims.

## Claims

1. A terminal device (110), comprising:
means for determining a discontinuous reception, DRX, operation status of the terminal device (110) based on whether the terminal device (110) operates in an extended DRX, eDRX, mode;
the terminal device (110) further comprises means for determining a DRX cycle of the terminal device (110) based on the determination, **characterized in that** the DRX operation status indicates whether an eDRX configured by an upper layer and/or an eDRX configured by a radio resource control, RRC, signaling is allowed, and the terminal device (110) is determined to operate in the eDRX mode by determining that the terminal device (110) operates in an RRC_idle state or an RRC_inactive state and the terminal device (110) is configured with the eDRX by an upper layer and/or by an RRC signaling;
wherein the DRX cycle of the terminal device (110) is determined from a plurality of:
a terminal device-specific DRX cycle configured by an RRC signaling or an upper layer;
a default DRX cycle broadcast in system information;
a first eDRX cycle configured by an upper layer for CN paging in an RRC_idle state or an RRC_inactive state;
a second eDRX cycle configured by an RRC signaling for RAN paging in an RRC_inactive state; or
a third eDRX cycle configured by system information for RAN paging in an RRC_inactive state.

2. The terminal device (110) of claim 1, wherein the terminal device (110) is determined to operate in the eDRX mode in the RRC_idle state, when the terminal device (110) is configured with the eDRX by the upper layer, and is signaled a first indication that the eDRX is allowed in the RRC_idle state.

3. The terminal device (110) of claim 1, wherein the terminal device (110) is determined to operate in the eDRX mode in the RRC_inactive state, when the terminal device (110) is configured with the eDRX by the RRC signaling and/or the upper layer, and is signaled a second indication that the eDRX is allowed in the RRC_inactive state.

4. The terminal device (110) of claim 1 or 3, wherein the terminal device (110) is determined to operate in the eDRX mode in the RRC_inactive state when the terminal device (110) is signaled, in system information, a second indication that the eDRX mode is allowed in the RRC_inactive state, and
wherein the system information further comprises an eDRX configuration by a radio access network, RAN.

5. The terminal device (110) of claim 4, wherein the terminal device (110) further comprises:
means for receiving the eDRX configuration by the RAN and the second indication in the system information, and
wherein the system information comprises system information block 1, SIB1.

6. The terminal device (110) of claim 1, wherein the terminal device (110) operates in an eDRX mode for a core network, CN, paging in RRC_idle or RRC_inactive states if the terminal device (110) is configured for eDRX by an upper layer and eDRX-AllowedIdle is signaled in SIB1.

7. The terminal device (110) of claim 1, wherein the terminal device (110) operates in an eDRX mode for RAN paging in an RRC_inactive state if the terminal device (110) is configured for eDRX by a RAN and eDRX-AllowedInactive is signaled in SIB1.

8. The terminal device (110) of any of claims 1-7, wherein the terminal device (110) is determined to operate in the eDRX mode by:
determining a validity of an eDRX configured by an upper layer and/or an RRC signaling based on whether the eDRX is allowed in the RRC_idle state or the RRC_inactive state.

9. The terminal device (110) of claim 8, wherein the terminal device (110) further comprises:
means for determining the eDRX configured by the upper layer in the RRC_idle state as valid when the terminal device (110) is signaled a first indication that the eDRX mode is allowed in the RRC_idle state.

10. The terminal device (110) of claim 8 or 9, wherein the terminal device (110) further comprises:
means for determining the eDRX configured by the RRC signaling and/or the upper layer in the RRC_inactive state as valid when the terminal device (110) is signaled a second indication that the eDRX is allowed in the RRC_inactive state.

11. A network device (120), comprising:
means for determining a discontinuous reception, DRX, operation status of a terminal device (110) based on whether the terminal device (110) operates in an extended DRX, eDRX, mode; and
the network device (120) further comprises means for determining a DRX cycle of the terminal device (110) based on the determination, **characterized in that** the DRX operation status indicates whether an eDRX configured by an upper layer and/or an eDRX configured by a radio resource control, RRC, signaling is allowed, and the terminal device (110) is determined to operate in the eDRX mode by determining that the terminal device (110) operates in an RRC_idle state or an RRC_inactive state and the terminal device (110) is configured with the eDRX by an upper layer and/or by an RRC signaling;
wherein the DRX cycle of the terminal device (110) is determined from a plurality of:
a terminal device-specific DRX cycle configured by an RRC signaling or an upper layer;
a default DRX cycle broadcast in system information;
a first eDRX cycle configured by an upper layer for CN paging in an RRC_idle state or an RRC_inactive state;
a second eDRX cycle configured by an RRC signaling for RAN paging in an RRC_inactive state; or
a third eDRX cycle configured by system information for RAN paging in an RRC_inactive state.

12. A method (200, 300), comprising:
determining (210, 310) a discontinuous reception, DRX, operation status of a terminal device (110) based on whether the terminal device (110) operates in an extended DRX, eDRX, mode; and
the method further comprises determining (220, 320) a DRX cycle of the terminal device (110) based on the determination, **characterized in that** the DRX operation status indicates whether an eDRX configured by an upper layer and/or an eDRX configured by a radio resource control, RRC, signaling is allowed, and the terminal device (110) is determined to operate in the eDRX mode by determining that the terminal device (110) operates in an RRC_idle state or an RRC_inactive state and the terminal device (110) is configured with the eDRX by an upper layer and/or by an RRC signaling;
wherein the DRX cycle of the terminal device (110) is determined from a plurality of:
a terminal device-specific DRX cycle configured by an RRC signaling or an upper layer;
a default DRX cycle broadcast in system information;
a first eDRX cycle configured by an upper layer for CN paging in an RRC_idle state or an RRC_inactive state;
a second eDRX cycle configured by an RRC signaling for RAN paging in an RRC_inactive state; or
a third eDRX cycle configured by system information for RAN paging in an RRC_inactive state.

13. The method (200, 300) of claim 12, wherein the terminal device (110) is determined to operate in the eDRX mode in the RRC_idle state, when the terminal device (110) is configured with the eDRX by the upper layer, and is signaled a first indication that the eDRX is allowed in the RRC_idle state.

14. The method (200, 300) of claim 12, wherein the terminal device (110) is determined to operate in the eDRX mode in the RRC_inactive state, when the terminal device (110) is configured with the eDRX by the RRC signaling and/or the upper layer, and is signaled a second indication that the eDRX is allowed in the RRC_inactive state.

15. The method (200, 300) of any of claims 12-14, wherein the terminal device (110) is determined to operate in the eDRX mode by:
determining a validity of an eDRX configured by an upper layer and/or an RRC signaling based on whether the eDRX is allowed in the RRC_idle state or the RRC_inactive state.

## Patentansprüche

1. Endgerätevorrichtung (110), die Folgendes umfasst:
Mittel zum Bestimmen eines Betriebsstatus eines diskontinuierlichen Empfangs, DRX, der Endgerätevorrichtung (110) darauf basierend, ob die Endgerätevorrichtung (110) in einem erweiterten DRX(eDRX)-Modus betrieben wird;
die Endgerätevorrichtung (110) umfasst ferner Mittel zum Bestimmen eines DRX-Zyklus der Endgerätevorrichtung (110) auf Basis der Bestimmung, **dadurch gekennzeichnet, dass** der DRX-Betriebsstatus anzeigt, ob eine eDRX, die von einer oberen Schicht ausgelegt ist, und/oder eine eDRX, die von einer Funkressourcensteuerungs(RRC)-Signalisierung ausgelegt ist, erlaubt ist, und durch Bestimmen, dass die Endgerätevorrichtung (110) in einem RRC_idle-Status oder einem RRC_inactive-Status betrieben wird, bestimmt wird, dass die Endgerätevorrichtung (110) im eDRX-Modus betrieben wird, und die Endgerätevorrichtung (110) mit der eDRX durch eine obere Schicht und/oder eine RRC-Signalisierung ausgelegt ist;
wobei der DRX-Zyklus der Endgerätevorrichtung (110) aus einer Vielzahl von Folgendem bestimmt wird:
einem endgerätevorrichtungsspezifischen DRX-Zyklus, der von einer RRC-Signalisierung oder einer oberen Schicht ausgelegt ist;
einem DRX-Standardzyklus, der mittels Broadcast in Systeminformationen übermittelt wird;
einem ersten eDRX-Zyklus, der von einer oberen Schicht für CN-Paging in einem RRC_idle-Status oder einem RRC_inactive-Status ausgelegt ist;
einem zweiten eDRX-Zyklus, der von einer RRC-Signalisierung für ein RAN-Paging in einem RRC_inactive-Status ausgelegt ist; oder
einem dritten eDRX-Zyklus, der von Systeminformationen für ein RAN-Paging in einem RRC_inactive-Status ausgelegt ist.

2. Endgerätevorrichtung (110) nach Anspruch 1, wobei bestimmt wird, dass die Endgerätevorrichtung (110) im eDRX-Modus im RRC_idle-Status betrieben wird, wenn die Endgerätevorrichtung (110) mit der eDRX von der oberen Schicht ausgelegt ist und ihr eine erste Anzeige signalisiert wird, dass die eDRX im RRC_idle-Status erlaubt ist.

3. Endgerätevorrichtung (110) nach Anspruch 1, wobei bestimmt wird, dass die Endgerätevorrichtung (110) im eDRX-Modus im RRC_inactive-Status betrieben wird, wenn die Endgerätevorrichtung (110) mit der eDRX von der RRC-Signlisierung und/oder der oberen Schicht ausgelegt ist und ihr eine zweite Anzeige signalisiert wird, dass die eDRX im RRC_inactive-Status erlaubt ist.

4. Endgerätevorrichtung (110) nach Anspruch 1 oder 3, wobei bestimmt wird, dass die Endgerätevorrichtung (110) im eDRX-Modus im RRC_inactive-Status betrieben wird, wenn der Endgerätevorrichtung (110) eine zweite Anzeige in Systeminformationen signalisiert wird, dass der eDRX-Modus im RRC_inactive-Status erlaubt ist, und
wobei die Systeminformationen ferner eine eDRX-Auslegung von einem Funkzugangsnetzwerk, RAN, umfassen.

5. Endgerätevorrichtung (110) nach Anspruch 4, wobei die Endgerätevorrichtung (110) ferner Folgendes umfasst:
Mittel zum Empfangen der eDRX-Auslegung vom RAN und der zweiten Anzeige in den Systeminformationen, und
wobei die Systeminformationen einen Systeminformationsblock 1, SIB1, umfassen.

6. Endgerätevorrichtung (110) nach Anspruch 1, wobei die Endgerätevorrichtung (110) in einem eDRX-Modus für ein Kernnetzwerk(CN)-Paging im RRC_idle- oder RRC_inactive-Status betrieben wird, wenn die Endgerätevorrichtung (110) für eine eDRX von einer oberen Schicht ausgelegt ist und im SIB1 eDRX-AllowedIdle signalisiert wird.

7. Endgerätevorrichtung (110) nach Anspruch 1, wobei die Endgerätevorrichtung (110) in einem eDRX-Modus für ein RAN-Paging in einem RRC_inactive-Status betrieben wird, wenn die Endgerätevorrichtung (110) für eine eDRX von einem RAN ausgelegt ist und im SIB1 eDRX-AllowedInactive signalisiert wird.

8. Endgerätevorrichtung (110) nach einem der Ansprüche 1 bis 7, wobei durch Folgendes bestimmt wird, dass die Endgerätevorrichtung (110) im eDRX-Modus betrieben wird:
Bestimmen einer Gültigkeit einer eDRX, die von einer oberen Schicht und/oder einer RRC-Signalisierung ausgelegt ist, darauf basierend, ob die eDRX im RRC_idle-Status oder im RRC_inactive-Status erlaubt ist.

9. Endgerätevorrichtung (110) nach Anspruch 8, wobei die Endgerätevorrichtung (110) ferner Folgendes umfasst:
Mittel zum Bestimmen der eDRX, die von der oberen Schicht im RRC_idle-Status ausgelegt ist, als gültig, wenn der Endgerätevorrichtung (110) eine erste Anzeige signalisiert wird, dass der eDRX-Modus im RRC_idle-Status erlaubt ist.

10. Endgerätevorrichtung (110) nach Anspruch 8 oder 9, wobei die Endgerätevorrichtung (110) ferner Folgendes umfasst:
Mittel zum Bestimmen der eDRX, die von der RRC-Signalisierung und/oder der oberen Schicht im RRC_inactive-Status ausgelegt ist, als gültig, wenn der Endgerätevorrichtung (110) eine zweite Anzeige signalisiert wird, dass die eDRX im RRC_inactive-Status erlaubt ist.

11. Netzwerkvorrichtung (120), die Folgendes umfasst:
Mittel zum Bestimmen eines Betriebsstatus eines diskontinuierlichen Empfangs, DRX, einer Endgerätevorrichtung (110) darauf basierend, ob die Endgerätevorrichtung (110) in einem erweiterten DRX(eDRX)-Modus betrieben wird; und
die Netzwerkvorrichtung (120) umfasst ferner Mittel zum Bestimmen eines DRX-Zyklus der Endgerätevorrichtung (110) auf Basis der Bestimmung, **dadurch gekennzeichnet, dass** der DRX-Betriebsstatus anzeigt, ob eine eDRX, die von einer oberen Schicht ausgelegt ist, und/oder eine eDRX, die von einer Funkressourcensteuerungs(RRC)-Signalisierung ausgelegt ist, erlaubt ist, und durch Bestimmen, dass die Endgerätevorrichtung (110) in einem RRC_idle-Status oder einem RRC_inactive-Status betrieben wird, bestimmt wird, dass die Endgerätevorrichtung (110) im eDRX-Modus betrieben wird, und die Endgerätevorrichtung (110) mit der eDRX durch eine obere Schicht und/oder eine RRC-Signalisierung ausgelegt ist;
wobei der DRX-Zyklus der Endgerätevorrichtung (110) aus einer Vielzahl von Folgendem bestimmt wird:
einem endgerätevorrichtungsspezifischen DRX-Zyklus, der von einer RRC-Signalisierung oder einer oberen Schicht ausgelegt ist;
einem DRX-Standardzyklus, der mittels Broadcast in Systeminformationen übermittelt wird;
einem ersten eDRX-Zyklus, der von einer oberen Schicht für CN-Paging in einem RRC_idle-Status oder einem RRC_inactive-Status ausgelegt ist;
einem zweiten eDRX-Zyklus, der von einer RRC-Signalisierung für ein RAN-Paging in einem RRC_inactive-Status ausgelegt ist; oder
einem dritten eDRX-Zyklus, der von Systeminformationen für ein RAN-Paging in einem RRC_inactive-Status ausgelegt ist.

12. Verfahren (200, 300), das Folgendes umfasst:
Bestimmen (210, 310) eines Betriebsstatus eines diskontinuierlichen Empfangs, DRX, einer Endgerätevorrichtung (110) darauf basierend, ob die Endgerätevorrichtung (110) in einem erweiterten DRX(eDRX)-Modus betrieben wird; und
das Verfahren umfasst ferner das Bestimmen (220, 320) eines DRX-Zyklus der Endgerätevorrichtung (110) auf Basis der Bestimmung, **dadurch gekennzeichnet, dass** der DRX-Betriebsstatus anzeigt, ob eine eDRX, die von einer oberen Schicht ausgelegt ist, und/oder eine eDRX, die von einer Funkressourcensteuerungs(RRC)-Signalisierung ausgelegt ist, erlaubt ist, und durch Bestimmen, dass die Endgerätevorrichtung (110) in einem RRC_idle-Status oder einem RRC_inactive-Status betrieben wird, bestimmt wird, dass die Endgerätevorrichtung (110) im eDRX-Modus betrieben wird, und die Endgerätevorrichtung (110) mit der eDRX durch eine obere Schicht und/oder eine RRC-Signalisierung ausgelegt ist;
wobei der DRX-Zyklus der Endgerätevorrichtung (110) aus einer Vielzahl von Folgendem bestimmt wird:
einem endgerätevorrichtungsspezifischen DRX-Zyklus, der von einer RRC-Signalisierung oder einer oberen Schicht ausgelegt ist;
einem DRX-Standardzyklus, der mittels Broadcast in Systeminformationen übermittelt wird;
einem ersten eDRX-Zyklus, der von einer oberen Schicht für CN-Paging in einem RRC_idle-Status oder einem RRC_inactive-Status ausgelegt ist;
einem zweiten eDRX-Zyklus, der von einer RRC-Signalisierung für ein RAN-Paging in einem RRC_inactive-Status ausgelegt ist; oder
einem dritten eDRX-Zyklus, der von Systeminformationen für ein RAN-Paging in einem RRC_inactive-Status ausgelegt ist.

13. Verfahren (200, 300) nach Anspruch 12, wobei bestimmt wird, dass die Endgerätevorrichtung (110) im eDRX-Modus im RRC_idle-Status betrieben wird, wenn die Endgerätevorrichtung (110) mit der eDRX von der oberen Schicht ausgelegt ist und ihr eine erste Anzeige signalisiert wird, dass die eDRX im RRC_idle-Status erlaubt ist.

14. Verfahren (200, 300) nach Anspruch 12, wobei bestimmt wird, dass die Endgerätevorrichtung (110) im eDRX-Modus im RRC_inactive-Status betrieben wird, wenn die Endgerätevorrichtung (110) mit der eDRX von der RRC-Signlisierung und/oder der oberen Schicht ausgelegt ist und ihr eine zweite Anzeige signalisiert wird, dass die eDRX im RRC_inactive-Status erlaubt ist.

15. Verfahren (200, 300) nach einem der Ansprüche 12 bis 14, wobei durch Folgendes bestimmt wird, dass die Endgerätevorrichtung (110) im eDRX-Modus betrieben wird:
Bestimmen einer Gültigkeit einer eDRX, die von einer oberen Schicht und/oder einer RRC-Signalisierung ausgelegt ist, darauf basierend, ob die eDRX im RRC_idle-Status oder im RRC_inactive-Status erlaubt ist.

## Revendications

1. Dispositif terminal (110), comprenant :
des moyens pour déterminer un statut de fonctionnement de réception discontinue, DRX, du dispositif terminal (110) selon que le dispositif terminal (110) fonctionne ou non dans un mode DRX étendu, eDRX ;
le dispositif terminal (110) comprend en outre des moyens pour déterminer un cycle DRX du dispositif terminal (110) sur la base de la détermination, **caractérisé en ce que** le statut de fonctionnement DRX indique si un eDRX configuré par une couche supérieure et/ou un eDRX configuré par une signalisation de contrôle de ressources radio, RRC, est autorisé, et le dispositif terminal (110) est déterminé pour fonctionner dans le mode eDRX en déterminant que le dispositif terminal (110) fonctionne dans un état RRC_idle [état RRC en veille] ou un état RRC_inactive, [état RRC inactif] et le dispositif terminal (110) est configuré avec le eDRX par une couche supérieure et/ou par une signalisation RRC ;
dans lequel le cycle DRX du dispositif terminal (110) est déterminé à partir d'une pluralité des éléments suivants :
un cycle DRX spécifique au dispositif terminal configuré par une signalisation RRC ou une couche supérieure ;
un cycle DRX par défaut diffusé dans des informations système ;
un premier cycle eDRX configuré par une couche supérieure pour une radiomessagerie CN dans un état RRC_idle ou un état RRC_inactive ;
un deuxième cycle eDRX configuré par une signalisation RRC pour une radiomessagerie RAN dans un état RRC_inactive ; ou
un troisième cycle eDRX configuré par des informations système pour une radiomessagerie RAN dans un état RRC_inactive.

2. Dispositif terminal (110) selon la revendication 1, dans lequel le dispositif terminal (110) est déterminé pour fonctionner dans le mode eDRX dans l'état RRC_idle lorsque le dispositif terminal (110) est configuré avec le eDRX par la couche supérieure et qu'une première indication lui est signalée pour indiquer que le eDRX est autorisé dans l'état RRC_idle.

3. Dispositif terminal (110) selon la revendication 1, dans lequel le dispositif terminal (110) est déterminé pour fonctionner dans le mode eDRX dans l'état RRC_inactive lorsque le dispositif terminal (110) est configuré avec le eDRX par la signalisation RRC et/ou la couche supérieure et qu'une deuxième indication lui est signalée pour indiquer que le eDRX est autorisé dans l'état RRC_inactive.

4. Dispositif terminal (110) selon la revendication 1 ou 3, dans lequel le dispositif terminal (110) est déterminé pour fonctionner dans le mode eDRX dans l'état RRC_inactive lorsqu'une une deuxième indication est signalée au dispositif terminal (110) dans des informations système pour indiquer que le mode eDRX est autorisé dans l'état RRC_inactive, et
dans lequel les informations système comprennent en outre une configuration eDRX par un réseau d'accès radio, RAN.

5. Dispositif terminal (110) selon la revendication 4, dans lequel le dispositif terminal (110) comprend en outre :
des moyens pour recevoir la configuration eDRX par le RAN et la deuxième indication dans les informations système, et
dans lequel les informations système comprennent le bloc d'informations système 1, SIB1.

6. Dispositif terminal (110) selon la revendication 1, dans lequel le dispositif terminal (110) fonctionne dans un mode eDRX pour une radiomessagerie de réseau central, CN, dans des états RRC_idle ou RRC_inactive si le dispositif terminal (110) est configuré pour un eDRX par une couche supérieure et si un eDRX-AllowedIdle est signalé dans le SIB1.

7. Dispositif terminal (110) selon la revendication 1, dans lequel le dispositif terminal (110) fonctionne dans un mode eDRX pour une radiomessagerie RAN dans un état RRC_inactive si le dispositif terminal (110) est configuré pour un eDRX par un RAN et si un eDRX-AllowedInactive est signalé dans le SIB1.

8. Dispositif terminal (110) selon l'une des revendications 1 à 7, dans lequel le dispositif terminal (110) est déterminé pour fonctionner dans le mode eDRX :
en déterminant une validité d'un eDRX configuré par une couche supérieure et/ou une signalisation RRC selon que le eDRX est autorisé ou non dans l'état RRC_idle ou dans l'état RRC_inactive.

9. Dispositif terminal (110) selon la revendication 8, dans lequel le dispositif terminal (110) comprend en outre :
des moyens pour déterminer le eDRX configuré par la couche supérieure dans l'état RRC_idle comme étant valide lorsqu'une première indication est signalée au dispositif terminal (110) pour indiquer que le mode eDRX est autorisé dans l'état RRC_idle.

10. Dispositif terminal (110) selon la revendication 8 ou 9, dans lequel le dispositif terminal (110) comprend en outre :
des moyens pour déterminer le eDRX configuré par la signalisation RRC et/ou la couche supérieure dans l'état RRC_inactive comme étant valide lorsqu'une deuxième indication est signalée au dispositif terminal (110) pour indiquer que le eDRX est autorisé dans l'état RRC_inactive.

11. Dispositif réseau (120), comprenant :
des moyens pour déterminer un statut de fonctionnement de réception discontinue, DRX, d'un dispositif terminal (110) selon que le dispositif terminal (110) fonctionne ou non dans un mode DRX étendu, eDRX ; et
le dispositif réseau (120) comprend en outre des moyens pour déterminer un cycle DRX du dispositif terminal (110) sur la base de la détermination, **caractérisé en ce que** le statut de fonctionnement DRX indique si un eDRX configuré par une couche supérieure et/ou un eDRX configuré par une signalisation de contrôle de ressources radio, RRC, est autorisé, et le dispositif terminal (110) est déterminé pour fonctionner dans le mode eDRX en déterminant que le dispositif terminal (110) fonctionne dans un état RRC_idle ou un état RRC_inactive, et le dispositif terminal (110) est configuré avec le eDRX par une couche supérieure et/ou par une signalisation RRC ;
dans lequel le cycle DRX du dispositif terminal (110) est déterminé à partir d'une pluralité des éléments suivants :
un cycle DRX spécifique au dispositif terminal configuré par une signalisation RRC ou une couche supérieure ;
un cycle DRX par défaut diffusé dans des informations système ;
un premier cycle eDRX configuré par une couche supérieure pour une radiomessagerie CN dans un état RRC_idle ou un état RRC_inactive ;
un deuxième cycle eDRX configuré par une signalisation RRC pour une radiomessagerie RAN dans un état RRC_inactive ; ou
un troisième cycle eDRX configuré par des informations système pour une radiomessagerie RAN dans un état RRC_inactive.

12. Procédé (200, 300), comprenant les étapes suivantes :
déterminer (210, 310) un statut de fonctionnement de réception discontinue, DRX, d'un dispositif terminal (110) selon que le dispositif terminal (110) fonctionne ou non dans un mode DRX étendu, eDRX ; et
le procédé comprend en outre le fait de déterminer (220, 320) un cycle DRX du dispositif terminal (110) sur la base de la détermination, **caractérisé en ce que** le statut de fonctionnement DRX indique si un eDRX configuré par une couche supérieure et/ou un eDRX configuré par une signalisation de contrôle de ressources radio, RRC, est autorisé, et le dispositif terminal (110) est déterminé pour fonctionner dans le mode eDRX en déterminant que le dispositif terminal (110) fonctionne dans un état RRC_idle ou un état RRC_inactive, et le dispositif terminal (110) est configuré avec le eDRX par une couche supérieure et/ou par une signalisation RRC ;
dans lequel le cycle DRX du dispositif terminal (110) est déterminé à partir d'une pluralité des éléments suivants :
un cycle DRX spécifique au dispositif terminal configuré par une signalisation RRC ou une couche supérieure ;
un cycle DRX par défaut diffusé dans des informations système ;
un premier cycle eDRX configuré par une couche supérieure pour une radiomessagerie CN dans un état RRC_idle ou un état RRC_inactive ;
un deuxième cycle eDRX configuré par une signalisation RRC pour une radiomessagerie RAN dans un état RRC_inactive ; ou
un troisième cycle eDRX configuré par des informations système pour une radiomessagerie RAN dans un état RRC_inactive.

13. Procédé (200, 300) selon la revendication 12, dans lequel le dispositif terminal (110) est déterminé pour fonctionner dans le mode eDRX dans l'état RRC_idle lorsque le dispositif terminal (110) est configuré avec le eDRX par la couche supérieure et qu'une première indication lui est signalée pour indiquer que le eDRX est autorisé dans l'état RRC_idle.

14. Procédé (200, 300) selon la revendication 12, dans lequel le dispositif terminal (110) est déterminé pour fonctionner dans le mode eDRX dans l'état RRC_inactive lorsque le dispositif terminal (110) est configuré avec le eDRX par la signalisation RRC et/ou la couche supérieure et qu'une deuxième indication lui est signalée pour indiquer que le eDRX est autorisé dans l'état RRC_inactive.

15. Procédé (200, 300) selon l'une des revendications 12 à 14, dans lequel le dispositif terminal (110) est déterminé pour fonctionner dans le mode eDRX :
en déterminant une validité d'un eDRX configuré par une couche supérieure et/ou une signalisation RRC selon que le eDRX est autorisé ou non dans l'état RRC_idle ou dans l'état RRC_inactive.
